# EUROPEAN PATENT APPLICATION

(11) **EP 0 574 338 A2**
(43) Date of publication of application: **15.12.1993**
(21) Application number: 93420235.9
(22) Date of filing: 09.06.1993
(51) Int. Cl.: G11B 5/86

(54) **Apparatus for measuring magnetic bias field for anhysteretic recording**

(30) Priority: 11.06.1992 US 897258
(71) Applicant: EASTMAN KODAK COMPANY, Rochester, New York 14650-2201 (US)
(72) Inventor: Orlicki, David M., Eastman Kodak Company, Rochester, New York 14650-2201 (US)
(74) Representative: Buff, Michel

(57) **Abstract**

An apparatus for anhysteretically transferring information from a master medium (14,22) to a slave medium (12) when the two are in contact on a rotating drum (10) in the presence of a bias field (28) from a nearby magnetic array (16), is provided with a sensor coil (30) carried by the drum, the coil being effective as the drum rotates to produce a voltage signal proportional the magnitude and sense of the bias field, thereby facilitating control of the transferring process.

## Description

### Field of the Invention

This invention concerns apparatus for anhysteretic recording. More particularly, the invention is related to measurement during recording of the magnetic bias field needed for transfer of magnetically encoded information from a master medium to a slave medium upon contact of the media in the presence of such a bias field.

### Background of the Invention

Since as early as the 1950's, methods and apparatus have been known for transferring magnetically encoded information from a relatively high coercivity master medium to a relatively low coercivity slave medium by bringing the two into intimate contact in the presence of a suitable magnetic bias field; so that, a duplicate of the information on the master medium is imparted to the slave. For example, U.S. Patent 2,738,383 describes an early version of such an apparatus in which the two media contact each other without relative movement as they wrap partially around a drum or roller. More recently, such apparatus has been used extensively for high speed duplication of video tapes, as described for instance in U.S. Patent 4,755,888. In order for the transfer of information to take place, the area of contact between the two media must be subjected to a bias field of alternating polarity and decreasing amplitude in the direction of movement of the media.

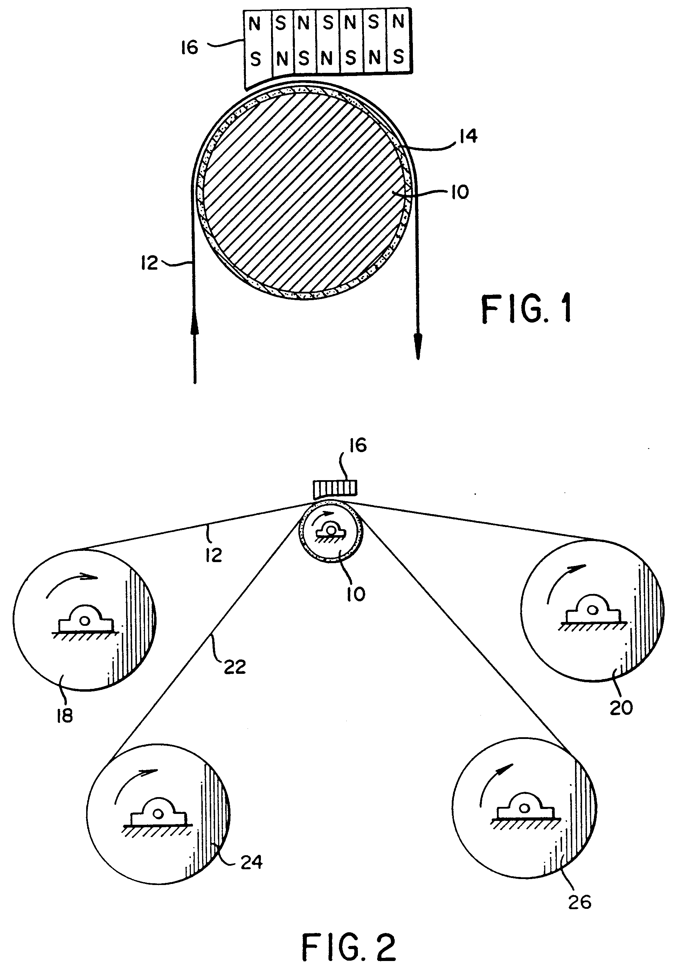

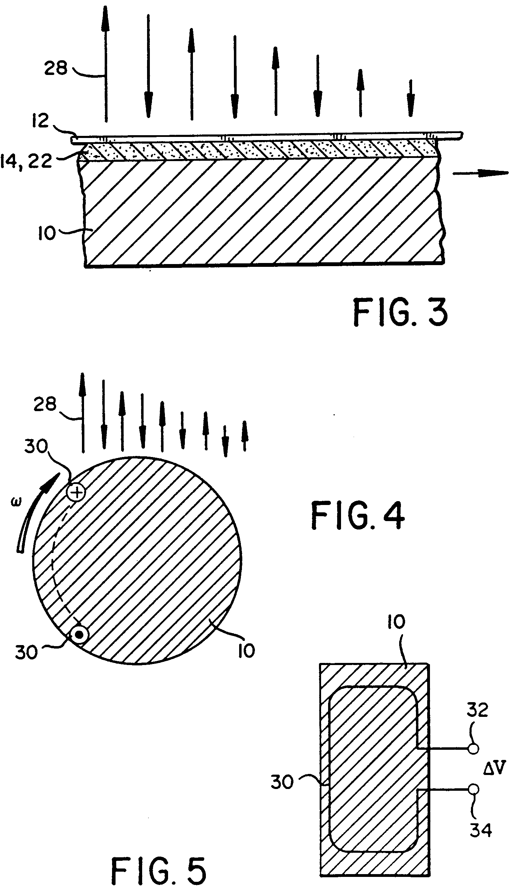

Figure 1 of this application illustrates schematically the heart of one type of anhysteretic recording apparatus. A drum 10 is mounted for rotation as part of a transport system for a slave magnetic medium such as a web 12 which may be a relatively conventional magnetic recording tape. The surface of drum 10 is provided at its outer surface with a master magnetic layer 14 having a coercivity which preferably is two to three times higher than that of web 12. Data magnetically encoded in layer 14 is to be transferred to web 12. To facilitate the transfer of information, a magnetic bias array 16 is positioned near the arc of drum 10 around which web 12 wraps as it moves in the direction indicated. The alternating magnetic field due to array 16 decreases in amplitude in the direction of movement of web 12 and serves to activate transfer of the magnetically encoded information from layer 14 to web 12, in accordance with the known anhysteretic process. Figure 2 of this application shows the heart of another type of anhysteretic recording apparatus. In this instance, drum 10 does not comprise a magnetic layer. Web 12 is transported from a supply reel 18 around an arc of drum 10 and to a take up reel 20. A master magnetic medium is provided in the form of a second web 22 which is transported from a supply reel 24 around an arc of drum 10 beneath and in intimate contact with web 12 and then to a take up reel 26. Array 16 functions as previously described to activate transfer of information from web 22 to web 12.

In order to assure faithful reproduction of the information from layer 14 or web 22, the field from array 16 must be maintained within limits determined by the magnetic coercivities of the master and slave media. Although measurement of the field from array 16 would be a useful technique for monitoring the status of such apparatus, until the present invention, reliable measurement of this field has been difficult to achieve.

### Summary of the Invention

In accordance with the invention, an apparatus for anhysteretically transferring information from a master medium to a slave medium while the media are in intimate contact is improved by providing an electrically conductive coil near the surface of the drum along an arc of which the intimate contact is established. The coil has a pair of terminals; so that, as the coil moves through the bias field, a voltage is induced across the terminals which is a function of the rotational speed and angular position of the drum and the polarity and amplitude of the bias field. This voltage is measured as an indication of the status of the apparatus.

In a preferred embodiment of the invention, means are provided for storing a signal proportional to a desired phase and amplitude of the induced voltage at each position of the coil within the bias field and for comparing the actual measured voltage to the desired signal, to determine whether the bias field is sufficient for proper anhysteretic transfer.

### Advantageous Effect of the Invention

The bias field required for anhysteretic recording is measured simply and reliably in accordance with the apparatus of the invention, thereby permitting process adjustments to be made if the field is not within desired specifications.

### Brief Description of the Drawings

Figure 1 shows a schematic view of an anhysteretic recording apparatus suitable for improvement in accordance with the invention, in which the master medium is provided on a rotatable drum.

Figure 2 shows a schematic view of another anhysteretic recording apparatus suitable for improvement in accordance with the invention, in which the master medium is provided on a flexible web.

Figure 3 shows a fragmentary view of a slave medium in contact with a master medium, indicating schematically how the bias field alternates in polarity and decreases in magnitude as the media move through the field.

Figure 4 shows a schematic, sectional view of a transfer drum embodying a sensor coil in accordance with the invention.

Figure 5 shows a schematic view of the drum as seen from the left side of Figure 4, illustrating how the sensor coil extends along a portion of the circumference of the drum.

Figure 6 shows schematically the orientation of the sensor coil relative to the bias field.

Figure 7 shows graphically the change in voltage in the sensor coil as a function of time, for two rotational speeds of the drum.

Figure 8 shows graphically two cycles of the change in voltage for a given rotational speed.

Figure 9 shows a schematic view as in Figure 1, where means have been included for calibrating the output of the sensor coil.

Figure 10 shows a schematic of an electrical control and signal processing system useful with the invention.

### Description of the Preferred Embodiments

The following is a detailed description of the preferred embodiments of the invention, reference being made to the drawings in which the same reference numerals identify the same elements of structure in each of the several Figures.

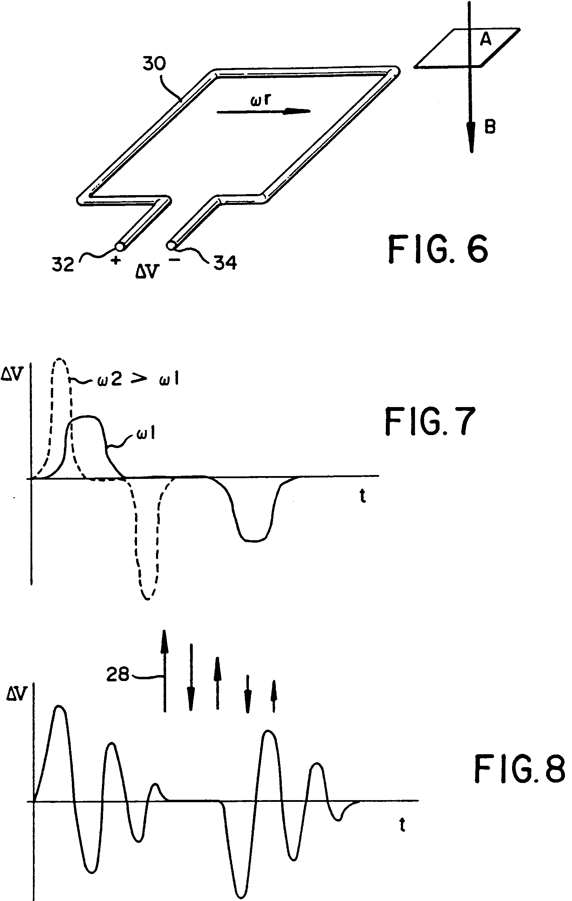

Figure 3 shows a fragmentary view of a portion of the arc over which slave medium 12 contacts master medium 14 or 22. The amplitude and sense of the magnetic bias field 28 from array 16 are represented by a series of vectors of alternating polarity which decrease in magnitude in the downstream direction of web movement. The air gap between array 16 and web 12 typically is too small to allow direct measurement of the distribution of field 28 by conventional means such as a Hall effect or magneto-resistive probe. In accordance with the invention, means are incorporated into drum 10 which will allow direct measurement of field 28 from array 16. As shown in Figures 4 and 5, the improvement of the invention comprises a sensor loop or coil 30 of conductive material which is positioned within drum 10 at or near the cylindrical surface of the drum. Sensor coil 30 may comprise a single turn or multiple turns of wire embedded in the drum or may comprise conductive tracks in the surface of the drum laid down using familiar printed circuit techniques. Preferably, the circumferential extent of sensor coil 30 should be about the width of one pole face of array 16, to avoid averaging over several pole faces. During operation, anhysteretic transfer occurs while drum 10 is rotating at some angular velocity ω indicated by the arrow in Figure 4. Referring to Figure 6, sensor coil 30 passes through a region in space where a magnetic flux density B, representative of a region of field 28 from array 16, is present through an area A. In accordance with Faraday's and Lenz's laws, a voltage ΔV is induced across the terminals 32,34 of sensor coil 30, in proportion to the time rate of change of total flux linked by sensor coil 30.

Figure 7 shows representative waveforms for the voltage induced at terminals 32,34 for two velocities of coil penetration through flux density B. The induced voltage is non-zero only during intervals when a boundary of coil 30 is penetrating area A. Under the condition that coil 30 preferably is larger than area A, this results in the induction of two mirror symmetric lobes of opposite polarity as coil 30 first enters area A and then as it leaves area A. At higher speeds of penetration, the lobes are higher and narrower than for lower speeds of penetration since the time rate of change of flux B linked by coil 30 is greater at greater angular velocities.

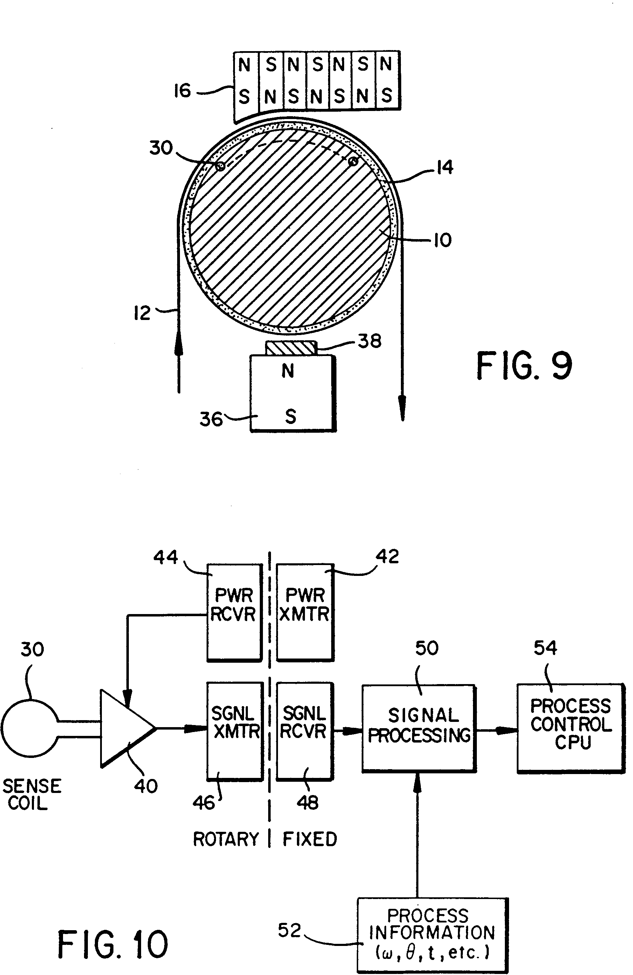

Figure 8 shows a spatially varying magnetic field of the type shown in Figure 4 positioned above a plot of ΔV versus time, indicating how ΔV changes as a coil 30 of the type shown in Figures 4 and 5 traverses such a field. The time history of the voltage induced across terminals 32,34 is directly proportional to the amplitude and sense of field 28 and the instantaneous angular velocity of drum 10. The field in the anhysteretic recording region can be determined using the arrangement shown in Figure 9. A magnet 36 is mounted near drum 10, preferably on the side opposite to array 16; so that, coil 30 can link the flux of array 16 or magnet 36 but never the flux from both at the same time. A calibrated flux field sensor 38 is mounted between magnet 36 and drum 10. Then, as coil 30 passes through the field from magnet 36, the voltage induced across terminals 32,34 can be compared to that induced in calibrated sensor 38. Assuming a constant angular velocity of drum 10, the voltage induced by array 16 can be compared to that induced by magnet 36 and the readings can be properly scaled by reference to the readings of sensor 38.

Referring now to Figure 10, the voltage induced in coil 30 is produced in the rotating frame of reference of drum 10. Typical signal strengths will be in the millivolt or microvolt range. Preamplification of the induced voltage may be provided by a suitable amplifier 40 located on drum 10 and power for amplifier 40 may be provided from an external power transmitter 42 by conventional means such as slip rings to a power receiver 44 connected to amplifier 40. A rotary transformer with rectification and regulation on the drum side would also be useful, as would a replaceable battery within the drum. The preamplified signal is directed to a suitable transmitter 46 which communicates with a signal receiver 48 by suitable means such as slip rings, rotary transformer or modulated light beam, for example. A signal processing device 50, which may be comprised in a general purpose computer, receives the output of receiver 48 and process information from a source 52, which may include concurrent comparative readings from sensor 38, and provides an output related to the status of the field from array 16 to the process controller 54 for the anhysteretic recorder.

While my invention has been shown and described with reference to particular embodiments thereof, those skilled in the art will understand that other variations in form and detail may be made without departing from the scope and spirit of my invention.

## Claims

1. Apparatus for anhysteretically transferring information, including an encoded master medium (14), a slave medium (12), a rotatable drum (10) for bringing the master medium and the slave medium into intimate contact along an arc of the drum as the drum rotates, and means (16) positioned near the arc for producing a magnetic bias field (28) of alternating polarity along the arc and of decreasing amplitude in the direction of rotation of the drum to facilitate the transferring, characterized by an electrically conductive coil (30) mounted on the drum in position to pass through the bias field, the coil having a pair of terminals (32,34), whereby a varying voltage is induced across the terminals as the drum rotates; and means (40-50) for measuring the voltage as a function of time.

2. Apparatus according to Claim 1, further characterized by means (52) for storing information proportional to a desired magnitude of the voltage as a function of the angular position and velocity of the drum; and means (54) for comparing the voltage and the information to determine whether the bias field is proper for the transferring.

3. Apparatus according to Claim 1, wherein the slave medium and the master medium each comprise an elongated web (12,22) having a coating of magnetic material.

4. Apparatus according to Claim 1, wherein the slave medium comprises an elongated web having a coating of magnetic material and the master medium comprises a layer of magnetic material on the drum.

5. Apparatus according to Claim 1, further characterized by the coil being embedded in a circumferential surface of the drum.
